# EUROPÄISCHE PATENTSCHRIFT

(11) **EP 1 118 514 B1**
(45) Veröffentlichungstag und Bekanntmachung des Hinweises auf die Patenterteilung: **21.09.2005**
(21) Anmeldenummer: 00127202.0
(22) Anmeldetag: 14.12.2000
(51) Int. Cl.: B60R 25/00, B60R 25/04

(54) **Kraftfahzeug mit einer Vielzahl von Bauteilen**
Vehicle with a plurality of components
Véhicule avec une pluralité de composants

(30) Priorität: 19.01.2000 DE 10001986
(43) Veröffentlichungstag der Anmeldung: 25.07.2001
(73) Patentinhaber: Volkswagen Aktiengesellschaft, 38436 Wolfsburg (DE)
(72) Erfinder: Lübke, Andreas, Dr., 38442 Wolfsburg (DE); Zawade, Torsten, 31228 Peine (DE); Stock, Friedrich, Dipl.-Ing., 38442 Wolfsburg (DE); Marcks, Oliver, 38524 Grussendorf (DE)

(56) Entgegenhaltungen:
- EP-A- 0 723 896
- EP-A- 0 899 161
- DE-A- 4 334 859

## Beschreibung

Die Erfindung geht aus von einem Kraftfahrzeug mit einer Vielzahl von Bauteilen gemäß dem Oberbegriff des Anspruchs 1.

Kraftfahrzeuge enthalten in zunehmendem Maße eine Vielzahl von mechanischen oder elektronischen Bauteilen, die zu Steuerung und Überwachung bestimmter Funktionen über einen Datenbus miteinander oder mit einer zentralen Steuereinheit kommunizieren. In der Praxis besteht oft der Wunsch oder die Notwendigkeit für eine Prüfung, ob alle für ein Kraftfahrzeug vorgesehenen Bauteile in dem Kraftfahrzeug enthalten sind und ob jeweils die richtigen, zu dem Kraftfahrzeug gehörenden und mit diesem einwandfrei arbeitenden Bauteile eingebaut sind. Diese Notwendigkeit besteht zum Beispiel bei der Fertigung, um die Vollständigkeit der eingebauten Bauteile zu überprüfen und möglichst schnell zu erkennen, wenn ein Bauteil eingebaut ist, das mit den übrigen Bauteilen des Gerätes nicht einwandfrei oder gar nicht zusammenarbeitet oder zwar einwandfrei zusammenarbeitet, jedoch nicht den Kundenwünschen bei einem bestimmten Fahrzeug, zum Beispiel für eine Klimaelektronik, entspricht.

Die Notwendigkeit der Erkennung des Fehlens oder des Ausbaus eines Bauteils besteht auch im Rahmen einer Diebstahlsicherung oder Diebstahlwarnanlage, um einen unrechtmäßigen Ausbau eines Bauteiles möglichst schnell und automatisch zu erkennen und entsprechende Maßnahmen auszulösen. Dabei besteht auch der Wunsch, den Einbau eines Bauteiles in ein Kraftfahrzeug zu erkennen, das nicht zu dem Kraftfahrzeug gehört und zum Beispiel aus einem anderen Kraftfahrzeug gestohlen wurde.

Aus der EP-A-0 723 896 (Oberbegriff von Anspruch 1) ist ein Diebstahlsicherungssystem für ein Kraftfahrzeug mit einer Anzahl diebstahlrelevanter Systemkomponenten und Übertragungsstrecken zur bidirektionalen Kommunikation zwischen den diebstahlrelevanten Systemkomponenten, einer externen Zentralstelle sowie einer Übertragungseinheit zur Datenübertragung zwischen den diebstahlrelevanten Systemkomponenten und der Zentralstelle bekannt. Zu den diebstahlrelevanten Systemkomponenten gehört ein eine Wegfahrsperrenfunktion enthaltendes Steuergerät. Die Systemkomponenten können entweder direkt mit der Zentralstelle bidirektional kommunizieren oder indirekt über das die Wegfahrsperrenfunktion enthaltende Steuergerät als Vennittlungsstelle zwischen den Systemkomponenten und der Zentralstelle. Um eine sichere und zuverlässige Inbetriebnahme der diebstahlrelevanten Systemkomponenten zu gewährleisten, ist vorgesehen, dass alle diebstahlrelevanten Systemkomponenten des Diebstahlsicherungssystems vor ihrer erstmaligen Inbetriebnahme jeweils mit einer für die jeweilige Systemkomponente charakteristischen Identifikationsnummer und einer von außerhalb der Systemkomponente nicht auslesbaren, individuellen Geheimnummer in einem nicht flüchtigen Datenspeicher der Systemkomponente abgespeichert, versehen werden. Durch die Zentralstelle werden die Identifikationsnummern und die Geheimnummem der diebstahlrelevanten Systemkomponenten registriert. Die zur Identifixierung der jeweiligen diebstahlrelevanten Systemkomponente dienenden Identifikationsnummern werden innerhalb des Diebstahlsicherungssystem und zwischen dem Diebstahlsicherungssystem und der Zentralstelle im Klartext übertragen. Die nicht im Klartext übertragenen Geheimnummern der diebstahlrelevanten Systemkomponenten dienen als Kommunikationsschlüssel für kryptologische Protokolle bei der Datenübertragung der diebstahlrelevanten Systemkomponenten innerhalb des Diebstahlsicherungssystems oder/und mit der Zentralstelle.

Ferner ist aus der EP-A-0 899 161 eine Kommunikationsanlage für ein Kraftfahrzeug mit einer Mehrzahl von Komponenten, die an verschiedenen Stellen des Kraftfahrzeugs positioniert sind, bekannt. Die Komponenten der Anlage sind über einen optischen Bus ringförmig miteinander verbunden, zu dessen Verwaltung ein Mikrocomputer vorgesehen ist. Jede der Komponenten weist einen Speicher für ein Anlagencodesignal auf. Der Microcomputer ist derart programmiert, dass er vor der Aktivierung einer Komponente überprüft, ob im Speicher dieser Komponente das Anlagencodesignal abgespeichert ist oder nicht. Er gibt den Betrieb der Komponenten nur dann frei, wenn im Speicher dieser Komponente das genannte Anlagencodesignal abgespeichert ist.

Diese Aufgabe wird durch die im Anspruch 1 angegebene Erfindung gelöst. Vorteilhafte Weiterbildungen der Erfindung sind in den Unteransprüchen angegeben.

Bei der Erfindung wird also eine eindeutige Zuordnung eines einzigen bestimmten Bauteils zu einem einzigen bestimmten Kraftfahrzeug durch einen entsprechenden Code hergestellt, mit dem Ziel, daß ein bestimmtes Bauteil nur in einem einzigen bestimmten Kraftfahrzeug arbeiten kann und von einem anderen Fahrzeug als nicht zu diesem bestimmten Kraftfahrzeug gehöriges Bauteil erkannt und gewissermaßen "abgestoßen" wird. Andererseits kann die Gesamtheit der anderen Bauteile erkennen, wenn ein für das Kraftfahrzeug vorgesehenes Bauteil in der Gesamtheit der Bauteile fehlt, zum Beispiel bei der Fertigung oder einem Service vergessen oder unberechtigt entwendet wurde.

Gemäß der Variante nach Merkmal a) des Anspruchs 1 kann bei der Fertigung eines Kraftfahrzeugs einfach und automatisch erkannt werden, wenn zum Beispiel ein Bauteil versehentlich nicht eingebaut wurde oder ein Bauteil eingebaut wurde, das technisch mit den anderen Bauteilen des Fahrzeugs nicht einwandfrei zusammenarbeitet oder zwar einwandfrei arbeitet, aber nicht einem speziellen Kundenwunsch entspricht. Diese Kontrolle ist auch in einem Servicefall in einer Reparaturwerkstatt vorteilhaft, um den versehentlichen Einbau eines falschen Bauteils oder das Fehlen eines Bauteils möglichst schnell zu erkennen und zu verhindern.

Gemäß der Variante nach Merkmal b) des Anspruchs 1 erfolgt eine Bauteilüberwachung im Sinne einer Diebstahlsicherung oder Diebstahlwarnanlage. Wenn aus der Gesamtheit der Bauteile ein Bauteil entfernt wird, wird dieses durch eine ständige Überwachung mittels der Codezuordnung von den übrigen Bauteilen durch eine Abfrage unverzüglich erkannt, so daß eine entsprechende Maßnahme wie eine Diebstahlwarnanlage oder eine Diebstahlmeldung an eine Zentralstelle ausgelöst werden kann. Auf gleiche Weise kann der unberechtigte Einbau eines zum Beispiel aus einem Fahrzeug gestohlenen Bauteils in ein anderes Fahrzeug erkannt, gemeldet und möglicherweise verhindert werden.

Bei der Erfindung sind alle oder mehrere Bauteile des Kraftfahrzeugs derart in einem Ringverbund angeordnet, daß in einem Prüfvorgang jeweils ein Bauteil n eine Anfrage an das nächste Bauteil n+1 für dessen Anwesenheit und Berechtigung richtet und von diesem eine entsprechende Antwort bekommt und daraufhin das Bauteil n+1 eine Anfrage an das folgende Bauteil n+2 richtet usw.

Gemäß einer Ausführungsform der Erfindung wird im Rahmen einer Diebstahlsicherung das Fehlen oder der vorgenommene Ausbau eines Bauteils zur Aktivierung einer Startsperre ausgenutzt, indem zum Beispiel das Starten des Fahrzeugs durch Eingriff in die Motorelektronik oder Sperrung von zum Fahren benötigter Bauteile verhindert wird. Ein solcher Prüfvorgang erfolgt vorzugsweise jeweils automatisch beim Startversuch des Kraftfahrzeugs.

Die Erfindung wird im folgenden anhand der Zeichnung näher erläutert. In der Zeichnung zeigen:
- Fig. 1: ein Ausführungsbeispiel mit vier miteinander kommunizierenden Steuergeräten und
- Fig. 2: mehrere Steuergeräte **gemäß dem Stand der Technik,** die mit einer Zentraleinheit kommunizieren.

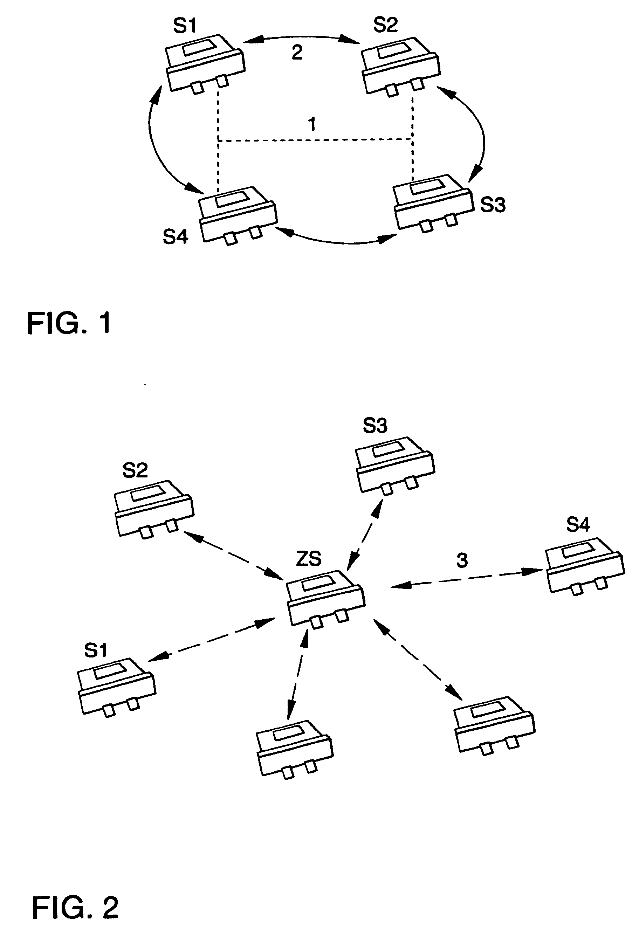

Fig. 1 zeigt vier Bauteile in Form von Steuergeräten S1, S2, S3, S4, die über einen sogenannten CAN-BUS miteinander kommunizieren. Die gestrichelt dargestellten Leitungen 1 zwischen den Steuergeräten S1-S4 stellen einen sogenannten CAN-BUS oder ein anderes Vernetzungskonzept dar. Die gebogenen Pfeile 2 jeweils zwischen den Steuergeräten S1-S4 stellen die beschriebene Überprüfung dar, ob alle Steuergeräte vorhanden sind und alle Steuergeräte zu dem bestimmten Kraftfahrzeug gehören. Diese Überprüfung erfolgt in verschlüsselter oder unverschlüsselter Form. Dabei sind alle Steuergeräte S1-S4 in einem Ringverbund angeordnet sind. Das Steuergerät S1 richtet zum Beispiel eine Anfrage an das Steuergerät S2 dafür, ob das Steuergerät S2 vorhanden ist und um welchen Typ eines Steuergerätes es sich handelt. Daraufhin sendet das Steuergerät S2 eine Antwort an das Steuergerät S1 zurück, zum Beispiel mit dem Inhalt "Ich bin vorhanden und bin das Steuergerät Typ XYZ", zum Beispiel eine Scheinwerfereinheit. Aus dieser Antwort kann das Steuergerät S1 erkennen, daß das Steuergerät S2 vorhanden ist und ob das Steuergerät S2 wirklich zu diesem bestimmten Kraftfahrzeug gehört. Daraufhin richtet innerhalb des Ringverbunds nunmehr das Steuergerät S2 eine entsprechende Anfrage an das nächste Steuergerät S3 und empfängt von diesem wiederum eine Antwort der beschriebenen Form.

Das wird fortgesetzt, bis alle Steuergeräte in dem Ringverbund auf ihre Anwesenheit und ihre richtige und rechtmäßige Zugehörigkeit zu dem bestimmten Kraftfahrzeug überprüft worden sind.

Wenn festgestellt wird, daß ein Bauteil fehlt oder aus technischen Gründen oder in Anbetracht eines Kundenwunsches nicht zu dem bestimmten Kraftfahrzeug gehört, wird eine entsprechende Meldung abgegeben. Mit dieser Anordnung kann auch im Rahmen einer Diebstahlwarnanlage festgestellt werden, wenn ein Steuergerät entwendet wird oder in ein anderes Kraftfahrzeug eingebaut wird, für das das gestohlene Steuergerät nicht vorgesehen ist. Daraus kann dann zum Beispiel ein Startvorgang verhindert, eine Diebstahlwarnanlage in Form eines Huptons ausgelöst oder eine Meldung an eine mit dem Kraftfahrzeug kommunizierende Zentrale ausgelöst werden. Die Zentrale kann dann gegebenenfalls das Kraftfahrzeug stillegen oder eine örtliche Polizeistation informieren.

Fig. 2 zeigt eine Vielzahl von Steuergeräten S1-S4 **gemäß dem Stand der Technik,** die alle getrennt voneinander mit einer Zentraleinheit ZS kommunizieren. Die gestrichelt dargestellten Doppelpfeile 3 bezeichnen einen sogenannten CAN-BUS oder ein anderes Vemetzungskonzept.

## Patentansprüche

1. Kraftfahrzeug mit einer Vielzahl von Bauteilen, die über einen Datenbus miteinander in verschlüsselter oder unverschlüsselter Form kommunizieren, wobei jeweils ein Bauteil (S1-S4) einen Speicher mit einem speziell dieses Bauteil kennzeichnenden Code enthält, dieser Code auch in anderen Bauteilen des Fahrzeugs gespeichert ist und diese eindeutige Zuordnung zwischen Bauteil und Fahrzeug dazu dient,
a) bei der Fertigung oder beim Service den Einbau eines falschen, nicht zu diesem Fahrzeug gehörenden Bauteils (S1-S4) oder das Fehlen eines Bauteils zu erkennen und/oder
b) im Sinne einer Diebstahlsicherung den unberechtigten Ausbau oder Einbau eines Bauteils in ein Fahrzeug zu erkennen und eine entsprechende Maßnahme auszulösen,
**dadurch gekennzeichnet,**
**daß** mehr als zwei Bauteile (S1-S4) derart ausgebildet und derart in einem Ringverbund angeordnet sind, daß durch jeweils ein Bauteil n eine Anfrage an das Bauteil n+1 für dessen Anwesenheit und Berechtigung richtbar ist und von dem Bauteil n+1 eine entsprechende Antwort an das Bauteil n sendbar ist und dann durch das Bauteil n+1 eine Anfrage an das Bauteil n+2 richtbar ist usw..

2. Kraftfahrzeug nach Anspruch 1, **dadurch gekennzeichnet, daß** der Code derart individuell ausgebildet ist, daß ein bestimmtes Bauteil nur in einem einzigen Kraftfahrzeug arbeiten kann.

3. Kraftfahrzeug nach Anspruch 1, **dadurch gekennzeichnet, daß** dann, wenn in dem Ringverbund ein Bauteil fehlt oder nicht für das jeweilige Fahrzeug berechtigt ist, der Start des Fahrzeugs verhindert wird.

4. Kraftfahrzeug nach Anspruch 1, **dadurch gekennzeichnet, daß** der Prüfvorgang jeweils automatisch beim Start des Kraftfahrzeugs erfolgt.

## Claims

1. Motor vehicle with a plurality of components which communicate with one another in encrypted or non-encrypted form via a data bus, wherein in each case one component (S1-S4) contains a memory with a code which specifically characterizes this component, this code is also stored in other components of the vehicle and this uniquely defined assignment between the components and the vehicle has the purpose,
a) of detecting, during the fabrication or during a service, the installation of an incorrect component (S1-S4) which is not associated with this vehicle or the absence of a component and/or
b) of detecting, for the sake of protection against theft, the unauthorized removal or installation of a component in a vehicle and of triggering a corresponding measure,
**characterized in that** more than two components (S1-S4) are embodied in such a way, and arranged in an annular grouping, that in each case a component n can direct an inquiry to the component n+1 regarding its presence and authorization, and the component n+1 can transmit a corresponding response to the component n and an inquiry can then be directed to the component n+2 by the component n+1, etc.

2. Motor vehicle according to Claim 1, **characterized in that** the code is embodied individually in such a way that a specific component can operate only in a single motor vehicle.

3. Motor vehicle according to Claim 1, **characterized in that**, if a component is absent from the annular grouping or is not authorized for the respective vehicle, the vehicle is prevented from starting.

4. Motor vehicle according to Claim 1, **characterized in that** the checking process is carried out in each case automatically when the motor vehicle is started.

## Revendications

1. Véhicule automobile comprenant une pluralité de composants qui communiquent entre eux par le biais d'un bus de données sous une forme cryptée ou non cryptée, un composant (S1 - S4) comprenant à chaque fois une mémoire avec un code qui identifie spécifiquement ce composant, ce code étant également enregistré dans d'autres composants du véhicule et cette association explicite entre le composant et le véhicule servant,
a) lors de la fabrication ou lors de l'entretien, à reconnaître un composant (S1 - S4) erroné ne faisant pas partie de ce véhicule ou l'absence d'un composant et/ou
b) dans le sens d'une protection antivol, à détecter le démontage ou le montage non autorisé d'un composant dans le véhicule et à déclencher une mesure en conséquence,
**caractérisé en ce que** plus de deux composants (S1 - S4) sont configurés de telle sorte et disposés de telle sorte dans une liaison en anneau qu'une interrogation peut à chaque fois être adressée d'un composant n au composant n+1 afin de vérifier sa présence et sa légitimité et une réponse correspondante peut être envoyée par le composant n+1 au composant n et une interrogation peut ensuite être adressée du composant n+1 au composant n+2, etc.

2. Véhicule automobile selon la revendication 1, **caractérisé en ce que** le code est personnalisé de telle sorte qu'un composant donné ne peut fonctionner que dans un seul véhicule automobile.

3. Véhicule automobile selon la revendication 1, **caractérisé en ce que** le démarrage du véhicule est empêché lorsqu'un composant est manquant dans la liaison en anneau ou n'y est pas autorisé pour le véhicule concerné.

4. Véhicule automobile selon la revendication 1, **caractérisé en ce que** l'opération de contrôle s'effectue à chaque fois automatiquement lors du démarrage du véhicule automobile.
